# EUROPEAN PATENT APPLICATION

(11) **EP 0 965 434 A1**
(43) Date of publication of application: **22.12.1999**
(21) Application number: 98830364.0
(22) Date of filing: 16.06.1998
(51) Int. Cl.: B29C 47/76, B29B 17/00

(54) **Process and device for the continuous production of bar shapes of recycled heterogeneous plastics mixes**

(71) Applicant: Arte Plast S.a.s., di Giuseppe Micciche & C., 21040 Gerenzano, Varese (IT)
(72) Inventor: Micciche, Giuseppe, 21040 Gerenzano (Varese) (IT)
(74) Representative: Riccardi, Sergio

(57) **Abstract**

A process and a device for the continuous production of bar shapes of recycled heterogeneous plastics mix are disclosed, in which the shape is packed during extrusion by means of a vent system (19-21) for the extrusion gases, allowing to combine the various extruded materials so as to avoid any deformation during the subsequent calibrating, cooling and cutting steps, and for this purpose vent means (19-21) for said gases are provided inside the extrudate drawing head.

## Description

The present invention relates to a process and a corresponding device for the continuous production of bar shapes of recycled heterogeneous plastics mixes.

The ecological question and environmental protection are universal problems causing more and more concern and compelling to study new measures to limit and possibly diminish the environmental impact of the huge quantities of garbage generated by the needs and consumptions of the steadily increasing world population.

One of the most important and debated problems is to recycle plastic materials, being well known that many of them are not biodegradable at all or only in extremely long times. Thus there is a need to use again in some way these plastic materials generally arising from the sorted collection of urban solid rubbish or industrial production wastes. Indeed even incineration of these plastic materials is practically impossible as it would release such a quantity of toxic gases that would be extremely difficult to be neutralized and eliminated, with consequent further serious environmental hazard.

Therefore it was devised to recycle these plastic materials by crumbling, melting and making new plastic articles from them. One succeeded to produce molded articles, where the recycled heterogeneous plastic mix is cast in molds so as to obtain various articles of the desired shape.

Problems arise when it is desired to produce continuously bar or rod shapes that are then cut to the desired length. Indeed use of the normal production lines of continuous plastic shapes is impossible, because the product coming out from the drawing head, consisting of a mix of heterogeneous plastics and not an extrudate of well defined plastic material, during the subsequent calibrating and cooling steps undergoes a deformation due to the escape of the extrusion gases trapped inside, causing cavities, holes and warps making the product useless.

The object of the present invention is to solve this problem and to carry out a system allowing to produce continuously said bar or rod shapes of recycled heterogeneous plastics mixes, without the above mentioned drawbacks occurring during the steps after extrusion, so as to obtain an excellent product of the desired shape.

The problem is brilliantly solved by providing inside the extrudate drawing head means allowing escape and discharge of the extrusion gases right at the moment of drawing the extrudate, so that the shape coming out from the drawing head is practically free from said gases and will not undergo any deformation during the subsequent calibrating, cooling and cutting steps.

By discharging the extrusion gases directly in the drawing head, the various kinds of recycled plastic material constituting the extruded mix are being well combined and packed, so that a shape adapted to stand the subsequent working steps without risk of deformation comes out from the head.

The extrusion temperature of this recycled heterogeneous plastics mix is adjusted in a balanced way according to the mix composition, so as to allow a perfect combination of the materials. In the mix composition one has to make sure that it contains a sufficient quantity of polyethylene acting as a binder for the various ingredients.

The subsequent working steps of the extruded shape do not differ substantially from those conventionally used for the continuous production of plastic shapes of a well defined composition. The extrudate coming out from the head goes through calipers cooling it with water and vacuum so as to give the final shape that it is then cooled in a trough with low temperature water sprays. The continuous shape is then pulled at the fore end by a driving track and is cut at the outlet into the desired lengths by a circular blade.

The means for the escape of the extrusion gases in the drawing head comprise holes made centrally and laterally in the surfaces of the head side members facing the extrudate drawing die, which through passages made in said side members deliver the gases to outlet holes made in the outer front surfaces of said side members, where the gases are collected by a suitable sucking hood.

According to the mix composition, the temperature and other extrusion parameters, in other words according to the amount of gas to be discharged, the number of vent holes may be varied, so that means to obstruct a part of the holes that would not be required in some cases will be provided.

As a merely illustrative and non limiting example, a drawing head in which the vent means of the invention are made, is shown diagramatically in the accompanying drawings.

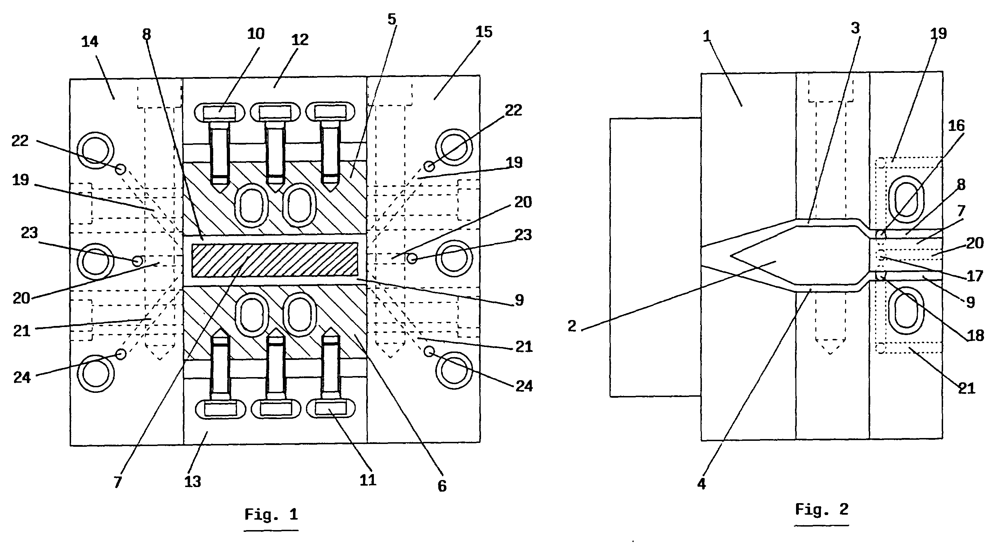

Fig. 1 shows a front view of the assembled drawing head;
Fig. 2 is a sectional side view of the head, and

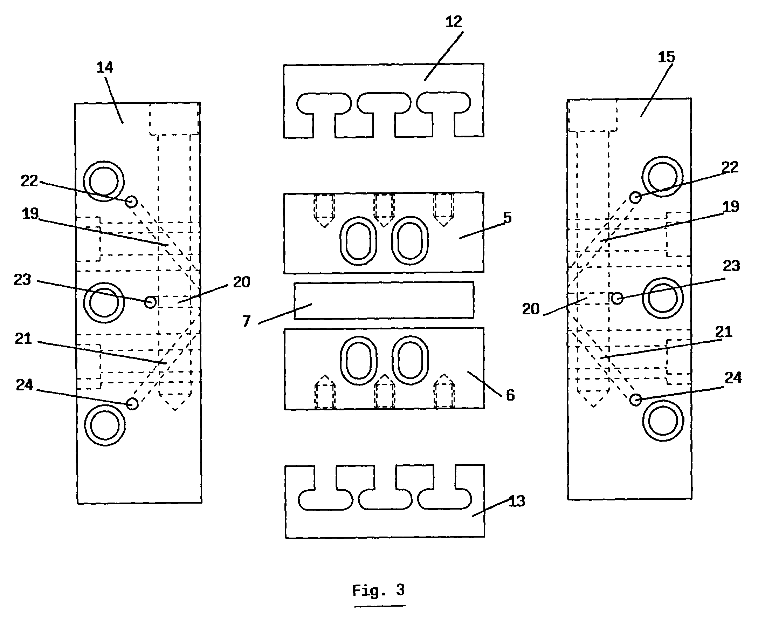

Fig. 3 is an exploded view of the various elements of the head.

In the accompanying drawings reference numerals are allotted only to the elements of the gas vent means, to the main parts of the head and those required for a better understanding of the invention.

The drawing head comprises a rear support block 1 fixed to the outlet mouth of the extruder, in which the extruded material is split by a central pin 2 into two flows going through an upper passage 3 and a lower passage 4, respectively. To the front face of the block 1 the two drawing plates 5, 6 and the central tongue 7 are fixed, jointly defining the outflow channels 8, 9 of the extrudate as a continuation of the passages 3, 4. The height of these channels 8, 9 and consequently the thickness of the drawn shape may be varied by increasing or decreasing the distance between the two plates 5, 6 through the adjustment screws 10, 11 housed in the outer counterplates 12, 13. The drawing head is completed by the side members 14, 15 in which gas vent means are made, consisting of holes 16, 17, 18 made centrally and laterally in the surfaces of the side members facing the channels 8, 9, and these holes through passages 19, 20, 21 in said side members, deliver the gases to outlet holes 22, 23, 24 made in outer front surfaces of said side members 14,15 where the gases are collected by a suitable sucking hood (not shown). In this way the extrudate is discharged from gases and can be drawn and thereafter worked without risk of undergoing deformations.

## Claims

1. Process for the continuous production of bar shapes of recycled heterogeneous plastics mix without shape deformation after the drawing stage, characterized in that the extrusion gases are vented and discharged at the same time of drawing the extrudate inside the drawing head so as to combine and pack the extruded mix.

2. Process according to Claim 1, characterized in that the heterogeneous plastics mix comprises a sufficient amount of polyethylene having the function of binder.

3. Process according to Claim 1, characterized in that the mix extrusion temperature is adjusted in a balanced way according to the composition of said mix.

4. Device for carrying out the process of Claim 1, characterized in that there are means inside the extrudate drawing head for venting and discharging the extrusion gases at the same time of drawing the extrudate.

5. Device according to Claim 4, characterized by comprising holes made centrally and laterally in the surfaces of the head side members facing the drawing die, that through passages made in said side members deliver the gases to outlet holes made in the outer front surfaces of said side members.

6. Device according to Claim 5, characterized by comprising also a sucking hood to collect and discharge said gases

7. Device according to Claim 5, characterized by comprising also means to obstruct a part of said holes that is not required under some circumstances.
